# EUROPÄISCHE PATENTSCHRIFT

(11) **EP 1 672 017 B1**
(45) Veröffentlichungstag und Bekanntmachung des Hinweises auf die Patenterteilung: **13.07.2011**
(21) Anmeldenummer: 05112090.5
(22) Anmeldetag: 14.12.2005
(51) Int. Cl.: C08L 21/00, C08K 5/54

(54) **Kautschukmischungen**
Rubber compositions
Mélanges de caoutchouc

(30) Priorität: 18.12.2004 DE 102004061014
(43) Veröffentlichungstag der Anmeldung: 21.06.2006
(73) Patentinhaber: Evonik Degussa GmbH, 45128 Essen (DE)
(72) Erfinder: Albert, Philipp, 79539, Lörrach (DE); Hasse, Andre, 52441, Linnich (DE); Klockmann, Oliver, 52382, Niederzier (DE); Korth, Karsten, 79639, Grenzach-Wyhlen (DE); Pieter, Reimund, 64625, Bensheim (DE)

(56) Entgegenhaltungen:
- WO-A-02/31040
- US-A- 6 140 393
- US-B1- 6 331 605

## Beschreibung

Die Erfindung betrifft Kautschukmischungen, ein Verfahren zu ihrer Herstellung und ihrer Verwendung.

Es ist bekannt, daß hydrolysierbare schwefelhaltige Organosiliciumverbindungen in der Lage sind, mit Hydroxylgruppen enthaltenden Füllstoffen, wie natürlichen und synthetischen Silicaten, Carbonaten, Gläsern und Metalloxiden, zu reagieren. Sie werden dabei zur Oberflächenmodifizierung und Haftvermittlung verwendet. In der kautschukverarbeitenden Industrie werden sie als Haftvermittler zwischen dem verstärkenden Füllstoff und dem eingesetzten Polymer eingesetzt (Angew. Chem. 98, (1986) 237-253, DE2141159, DE2212239, DE19544469A1, US3978103, US4048206, EP784072A1). Zu den bekanntesten Vertretern dieser Substanzklasse gehören die Polysulfan(alkyltrialkoxysilane), wie zum Beispiel Bis[3-triethoxysilylpropyl]tetrasulfan oder Bis[3-triethoxysilylpropyl]disulfan.

Desweiteren ist die Verwendung von mercaptofunktionalisierten Organosilanen in Kautschukmischungen bekannt (US3350345, FR2.094.859). Ebenso ist die Verwendung von Alkylsilanen zur Absenkung der Viskosität von Kautschukmischungen (EP795577A1, EP864605A2) und die Kombination mercaptofunktioneller Silane mit längerkettigen Alkylsilanen (DE10015309A1) bekannt.

Ein Nachteil der Verwendung der trialkoxyfunktionellen Silane ist die Emission flüchtiger Kohlenwasserstoffe, wobei es sich in der Praxis hauptsächlich um Methanol und Ethanol handelt.

Aus US 6331605 und US 6140 393 sind Kautschukmischungen enthaltend Kautschuk, Füullstoff und ein oligomerisiertes Mercaptoalkyl monodialkyl di/monoalkoxysilan bekannt. Ferner ist aus WO 02/31040 A eine Kautschukmischung enthaltend Kantschuk, Füullstoff und ein Mercaptoalkyl mono/dialkyl di/monoalkoxysilan bekannt.

Aus DE1043357A1 und EP1244676B1 sind Dialkylmonoalkoxysilylpolysulfide bekannt. Auf Grund der Dialkylmonoalkoxygruppe ist die Emission flüchtiger Kohlenwasserstoffe geringer als bei Trialkoxyverbindungen.

Nachteil der Dialkylmonoalkoxysilylpolysulfide ist der schlechte Abrieb und Weiterreißwiderstand.

Aufgabe der vorliegenden Erfindung ist es, Kautschukmischungen zur Verfügung zu stellen, bei deren Herstellung eine geringe Emission flüchtiger Kohlenwasserstoffe auftritt und die Kautschukmischungen einen verbesserten Weiterreißwiderstand gegenüber Kautschukmischungen mit bekannten Silanen aufweisen.

Gegenstand der Erfindung sind Kautschukmischungen, enthaltend Kautschuk, Füllstoffe, gegebenenfalls weitere Kautschukhilfsmittel und mindestens ein Organosilan der allgemeinen Formel I,

R¹R²R³SiR⁴-SH (I)

wobei R¹ Methyl oder Ethyl ist,
R² -O-(Y-O)ₘ-X ist, mit Y= verzweigte oder unverzweigte, gesättigte oder ungesättigte zweibindige Kohlenwasserstoffgruppe, vorzugsweise CH₂, CH₂CH₂, CH₂CH(CH₃) oder CH(CH₃)CH₂, X eine C1- bis C9-Alkylgruppe, vorzugsweise Methyl oder Ethyl, und m=1-40, bevorzugt 2-30, besonders bevorzugt 3 bis 25, ganz besonders bevorzugt 4 bis 20, außerordentlich bevorzugt 10 bis 20, ist,
R³ Methyl, Ethyl, Methoxy, Ethoxy oder R² ist,
und R⁴ eine verzweigte oder unverzweigte, gesättigte oder ungesättigte, aliphatische, aromatische oder gemischt aliphatische /aromatische zweibindige C₁-C₁₂ Kohlenwasserstoffgruppe ist.

Vorzugsweise kann mindestens eine der Gruppen R² oder R³ eine -O-(Y-O)ₘ-X Gruppe sein.

R⁴ kann bevorzugt CH₂, CH₂CH₂, CH₂CH₂CH₂, CH₂CH₂CH₂CH₂, CH(CH₃), CH₂CH(CH₃), CH(CH₃)CH₂, C(CH₃)₂, CH(C₂H₅), CH₂CH₂CH(CH₃) oder CH₂CH(CH₃)CH₂ sein.

Verbindungen der Formel I können sein:
[(C₄H₉O-(CH₂-CH₂O)₂] (Me)₂Si(CH₂)₃SH,
[(C₄H₉O-(CH₂-CH₂O)₃] (Me)₂Si(CH₂)₃SH,
[(C₄H₉O-(CH₂-CH₂O)₄] (Me)₂Si(CH₂)₃SH,
[(C₄H₉O-(CH₂-CH₂O)₅] (Me)₂Si(CH₂)₃SH,
[(C₄H₉O-(CH₂-CH₂O)₆] (Me)₂Si(CH₂)₃SH,

[(C₅H₁₁O-(CH₂-CH₂O)₂] (Me)₂Si(CH₂)₃SH,
[(C₅H₁₁O-(CH₂-CH₂O)₃] (Me)₂Si(CH₂)₃SH,
[(C₅H₁₁O-(CH₂-CH₂O)₄] (Me)₂Si(CH₂)₃SH,
[(C₅H₁₁O-(CH₂-CH₂O)₅] (Me)₂Si(CH₂)₃SH,
[(C₅H₁₁O-(CH₂-CH₂O)₆] (Me)₂Si(CH₂)₃SH,

[(C₆H₁₃O-(CH₂-CH₂O)₂] (Me)₂Si(CH₂)₃SH,
[(C₆H₁₃O-(CH₂-CH₂O)₃] (Me)₂Si(CH₂)₃SH,
[(C₆H₁₃O-(CH₂-CH₂O)₄] (Me)₂Si(CH₂)₃SH,
[(C₆H₁₃O-(CH₂-CH₂O)₅] (Me)₂Si(CH₂)₃SH,
[(C₆H₁₃O-(CH₂-CH₂O)₆] (Me)₂Si(CH₂)₃SH,

[(C₇H₁₅O-(CH₂-CH₂O)₂] (Me)₂Si(CH₂)₃SH,
[(C₇H₁₅O-(CH₂-CH₂O)₃] (Me)₂Si(CH₂)₃SH,
[(C₇H₁₅O-(CH₂-CH₂O)₄] (Me)₂Si(CH₂)₃SH,
[(C₇H₁₅O-(CH₂-CH₂O)₅] (Me)₂Si(CH₂)₃SH,
[(C₇H₁₅O-(CH₂-CH₂O)₆] (Me)₂Si(CH₂)₃SH,

[(C₈H₁₇O-(CH₂-CH₂O)₂] (Me)₂Si(CH₂)₃SH,
[(C₈H₁₇O-(CH₂-CH₂O)₃] (Me)₂Si(CH₂)₃SH,
[(C₈H₁₇O-(CH₂-CH₂O)₄] (Me)₂Si(CH₂)₃SH,
[(C₈H₁₇O-(CH₂-CH₂O)₅] (Me)₂Si(CH₂)₃SH,
[(C₈H₁₇O-(CH₂-CH₂O)₆] (Me)₂Si(CH₂)₃SH,

[(C₉H₁₉O-(CH₂-CH₂O)₂](Me)₂Si(CH)₃SH,
[(C₉H₁₉O-(CH₂-CH₂O)₃](Me)₂Si(CH₂)₃SH,
[(C₉H₁₉O-(CH₂-CH₂O)₄](Me)₂Si(CH)₃SH,
[(C₉H₁₉O-(CH₂-CH₂O)₅](Me)₂Si(CH₂)₃SH,
[(C₉H₁₉O-(CH₂-CH₂O)₆](Me)₂Si(CH)₃SH,

[(C₄H₉O-(CH₂-CH₂O)₂]₂(Me)Si(CH₂)₃SH,
[(C₄H₉O-(CH₂-CH₂O)₃]₂(Me)Si(CH₂)₃SH,
[(C₄H₉O-(CH₂-CH₂)₄]₂(Me)Si(CH₂)₃SH,
[(C₉H₉O-(CH₂-CH₂O)₅]₂(Me)Si(CH₂)₃SH,
[(C₄H₉O-(CH₂-CH₂O)₆]₂(Me)Si(CH₂)₃SH,

[(C₅H₁₁O-(CH₂-CH₂O)₂]₂(Me)Si(CH₂)₃SH,
[(C₅H₁₁O-(CH₂-CH_{2O})₃]₂(Me)Si(CH₂)₃SH,
[(C₅H₁₁O-(CH₂-CH₂O)₄]₂(Me)Si(CH₂)₃SH,
[(C₅H₁₁O-(CH₂-CH₂O)₅]₂(Me)Si(CH₂)₃SH,
[(C₅H₁₁O-(CH₂-CH₂O)₆]₂(Me)Si(CH₂)₃SH,

[(C₆H₁₃O-(CH₂-CH₂O)₂]₂(Me)Si(CH₂)₃SH,
[(C₆H₁₃O-(CH₂-CH₂O)₃]₂(Me)Si(CH₂)₃SH,
[(C₆H₁₃O-(CH₂-CH₂O)₄]₂(Me)Si(CH₂)₃SH,
[(C₆H₁₃O-(CH₂-CH₂O)₅]₂(Me)Si(CH₂)₃SH,
[(C₆H₁₃O-(CH₂-CH₂O)₆]₂(Me)Si(CH₂)₃SH,

[(C₇H₁₅O-(CH₂-CH₂O)₂]₂(Me)Si(CH₂)₃SH,
[(C₇H₁₅O-(CH₂-CH₂O)₃]₂(Me)Si(CH₂)₃SH,
[(C₇H₁₅O-(CH₂-CH₂O)₄]₂(Me)Si(CH₂)₃SH,
[(C₇H₁₅O-(CH₂-CH₂O)₅]₂(Me)Si(CH₂)₃SH,
[(C₇H₁₅O-(CH₂-CH₂O)₆]₂(Me)Si(CH₂)₃SH,

[(C₈H₁₇O-(CH₂-CH₂O)₂]₂(Me)Si(CH₂)₃SH,
[(C₈H₁₇O-(CH₂-CH₂O)₃]₂(Me)Si(CH₂)₃SH,
[(C₈H₁₇O-(CH₂-CH₂O)₄]₂(Me)Si(CH₂)₃SH,
[(C₈H₁₇O-(CH₂-CH₂O)₅]₂(Me)Si(CH₂)₃SH,
[(C₈H₁₇O-(CH₂-CH₂O)₆]₂(Me)Si(CH₂)₃SH,

[(C₉H₁₉O-(CH₂-CH₂O)₂]₂(Me)Si(CH₂)₃SH,
[(C₉H₁₉O-(CH₂-CH₂O)₃]₂(Me)Si(CH₂)₃SH,
[(C₉H₁₉O-(CH₂-CH₂O)₄]₂(Me)Si(CH₂)₃SH,
[(C₉H₁₉O-(CH₂-CH₂O)₅]₂(Me)Si(CH₂)₃SH,
[(C₉H₁₉O-(CH₂-CH₂O)₆]₂(Me)Si(CH₂)₃SH,

[(C₄H₉O-(CH₂-CH₂O)₂](Me)(EtO)Si(CH₂)₃SH,
[(C₄H₉O-(CH₂-CH₂O)₃](Me)(EtO)Si(CH₂)₃SH,
[(C₄H₉O-(CH₂-CH₂O)₄](Me)(EtO)Si(CH₂)₃SH,
[(C₄H₉O-(CH₂-CH₂O)₅](Me)(EtO)Si(CH₂)₃SH,
[(C₄H₉O-(CH₂-CH₂O)₆](Me)(EtO)Si(CH₂)₃SH,

[(C₅H₁₁O-(CH₂-CH₂O)₂](Me)(EtO)Si(CH₂)₃SH,
[(C₅H₁₁O-(CH₂-CH₂O)₃](Me)(EtO)Si(CH₂)₃SH,
[(C₅H₁₁O-(CH₂-CH₂O)₄](Me)(EtO)Si(CH₂)₃SH,
[(C₅H₁₁O-(CH₂-CH₂O)₅](Me)(EtO)Si(CH₂)₃SH,

   [(C₅H₁₁O-(CH₂-CH₂O)₆](Me)(EtO)Si(CH₂)₃SH,

[(C₉H₁₃O-(CH₂-CH₂O)₂](Me)(EtO)Si(CH₂)₃SH,
[(C₆H₁₃O-(CH₂-CH_{2O})₃](Me)(EtO)Si(CH₂)₃SH,
[(C₆H₁₃O-(CH₂-CH₂O)₄](Me)(EtO)Si(CH₂)₃SH,
[(C₆H₁₃O-(CH₂-CH₂O)₅](Me)(EtO)Si(CH₂)₃SH,
[(C₅H₁₃O-(CH₂-CH₂O)₆](Me)(EtO)Si(CH₂)₃SH,

[(C₇H₁₅O-(CH₂-CH₂O)₂](Me)(EtO)Si(CH₂)₃SH,
[(C₇H₁₅O-(CH₂-CH₂O)₃](Me)(EtO)Si(CH₂)₃SH,
[(C₇H₁₅O-(CH₂-CH₂O)₄](Me)(EtO)Si(CH₂)₃SH,
[(C₇H₁₅O-(CH₂-CH₂O)₅](Me)(EtO)Si(CH₂)₃SH,
[(C₇H₁₅O-(CH₂-CH₂O)₆](Me)(EtO)Si(CH₂)₃SH,

[(C₈H₁₇O-(CH₂-CH_{2O})₂](Me)(EtO)Si(CH₂)₃SH,
[(C₈H₁₇O-(CH₂-CH₂O)₃](Me)(EtO)Si(CH₂)₃SH,
[(C₈H₁₇O-(CH₂-CH₂O)₄](Me)(EtO)Si(CH₂)₃SH,
[(C₈H₁₇O-(CH₂-CH₂O)₅](Me)(EtO)Si(CH₂)₃SH,
[(C₈H₁₇O-(CH₂-CH₂O)₆](Me)(EtO)Si(CH₂)₃SH,

[(C₉H₁₉O-(CH₂-CH₂O)₂](Me)(EtO)Si(CH₂)₃SH,
[(C₉H₁₉O-(CH₂-CH₂O)₃](Me)(EtO)Si(CH₂)₃SH,
[(C₉H₁₉O-(CH₂-CH₂O)₄](Me)(EtO)Si(CH₂)₃SH,
[(C₉H₁₉O-(CH₂CH₂O)₅](Me)(EtO)Si(CH₂)₃SH,
[(C₉H₁₉O-(CH₂-CH₂O)₆](Me)(EtO)Si(CH₂)₃SH,

[(C₄H₉O-(CH₂-CH₂O)₂](Me)(MeO)Si(CH₂)₃SH,
[(C₄H₉O-(CH₂-CH₂O)₃](Me)(MeO)Si(CH₂)₃SH,
[(C₄H₉O-(CH₂-CH₂O)₄](Me)(MeO)Si(CH₂)₃SH,
[(C₄H₉O-(CH₂-CH₂O)₅](Me)(MeO)Si(CH₂)₃SH,
[(C₄H₉O-(CH₂-CH₂)₆](Me)(MeO)Si(CH₂)₃SH,

[(C₅H₁₁O-(CH₂-CH₂O)₂](Me)(MeO)Si(CH₂)₃SH,
[(C₅H₁₁O-(CH₂-CH₂O)₃](Me)(MeO)Si(CH₂)₃SH,
[(C₅H₁₁O-(CH₂-CH₂O)₄](Me)(MeO)Si(CH₂)₃SH,
[(C₅H₁₁O-(CH₂-CH₂O)₅](Me)(MeO)Si(CH₂)₃SH,
[(C₅H₁₁O-(CH₂-CH₂O)₆](Me)(MeO)Si(CH₂)₃SH,

[(C₅H₁₃O-(CH₂-CH₂O)₂](Me)(MeO)Si(CH₂)₃SH,
[(C₆H₁₃O-(CH₂-CH₂O)₃](Me)(MeO)Si(CH₂)₃SH,
[(C₆H₁₃O-(CH₂-CH₂O)₄](Me)(MeO)Si(CH₂)₃SH,
[(C₆H₁₃O-(CH₂-CH₂O)₅](Me)(MeO)Si(CH₂)₃SH,
[(C₆H₁₃O-(CH₂-CH₂O)₆](Me)(MeO)Si(CH₂)₃SH,

[(C₇H₁₅O-(CH₂-CH₂O)₂](Me)(MeO)Si(CH₂)₃SH,
[(C₇H₁₅O-(CH₂-CH₂O)₃](Me)(MeO)Si(CH₂)₃SH,
[(C₇H₁₅O-(CH₂-CH₂O)₄](Me)(MeO)Si(CH₂)₃SH,
[(C₇H₁₅O-(CH₂-CH₂O)₅](Me)(MeO)Si(CH₂)₃SH,
[(C₇H₁₅O-(CH₂-CH₂O)₆](Me)(MeO)Si(CH₂)₃SH,

[(C₈H₁₇O-(CH₂-CH₂O)₂](Me)(MeO)Si(CH₂)₃SH,
[(C₈H₁₇O-(CH₂-CH₂O)₃](Me)(MeO)Si(CH₂)₃SH,
[(C₈H₁₇O-(CH₂-CH₂O)₄](Me)(MeO)Si(CH₂)₃SH,
[(C₈H₁₇O-(CH₂-CH_{2O})₅](Me)(MeO)Si(CH₂)₃SH,
[(C₈H₁₇O-(CH₂-CH₂O)₆](Me)(MeO)Si(CH₂)₃SH,

[(C₉H₁₉O-(CH₂-CH₂O)₂](Me)(MeO)Si(CH₂)₃SH,
[(C₉H₁₉O-(CH₂-CH₂O)₃](Me)(MeO)Si(CH₂)₃SH,
[(C₉H₁₉O-(CH₂-CH₂O)₄](Me)(MeO)Si(CH₂)₃SH,
[(C₉H₁₉O-(CH₂-CH₂O)₅](Me)(MeO)Si(CH₂)₃SH oder
[(C₉H₁₉O-(CH₂-CH₂O)₆](Me)(MeO)Si(CH₂)₃SH, mit Me = CH₃ und Et = CH₂CH₃.

Verbindungen der Formel I mit X= C₃H₇, C₄H₉, C₅H₁₁, C₆H₁₃, C₇H₁₅, C₈H₁₇ oder C₉H₁₉ können sein:

[(X-O-(CH₂-CH(CH₃)O-)₂](Me)(MeO)Si(CH₂)₃SH,

[(X-O-(CH₂-CH(CH₃)O-)₃](Me)(MeO)Si(CH₂)₃SH,

[(X-O-(CH₂-CH(CH₃)O-)₄](Me)(MeO)Si(CH₂)₃SH,

[(X-O-(CH₂-CH(CH₃)O-)₅](Me)(MeO)Si(CH₂)₃SH,

[(X-O-(CH₂-CH(CH₃)O-)₆](Me)(MeO)Si(CH₂)₃SH,

[(X-O-(CH₂-CH(CH₃)O-)₇](Me)(MeO)Si(CH₂)₃SH,

[(X-O-(CH₂-CH(CH₃)O-)₈](Me)(MeO)Si(CH₂)₃SH,

[(X-O-(CH₂-CH(CH₃)O-)₉](Me)(MeO)Si(CH₂)₃SH,

[(X-O-(CH₂-CH(CH₃)O-)₁₀](Me)(MeO)Si(CH₂)₃SH,

[(X-O-(CH₂-CH(CH₃)O-)₁₁](Me)(MeO)Si(CH₂)₃SH,

[(X-O-(CH₂-CH(CH₃)O-)₁₂](Me)(MeO)Si(CH₂)₃SH,

[(X-O-(CH₂-CH(CH₃)O-)₁₃](Me)(MeO)Si(CH₂)₃SH,

[(X-O-(CH₂-CH(CH₃)O-)₁₄](Me)(MeO)Si(CH₂)₃SH,

[(X-O-(CH₂-CH(CH₃)O-)₁₅](Me)(MeO)Si(CH₂)₃SH,

[(X-O-(CH₂-CH(CH₃)O-)₁₆](Me)(MeO)Si(CH₂)₃SH,

[(X-O-(CH₂-CH(CH₃)O-)₁₇](Me)(MeO)Si(CH₂)₃SH,

[(X-O-(CH₂-CH(CH₃)O-)₁₈](Me)(MeO)Si(CH₂)₃SH,

[(X-O-(CH₂-CH(CH₃)O-)₁₉](Me)(MeO)Si(CH₂)₃SH,

[(X-O-(CH₂-CH(CH₃)O-)₂₀](Me)(MeO)Si(CH₂)₃SH,

[(X-O-(CH₂-CH(CH₃)O-)₂](Me)(EtO)Si(CH₂)₃SH,

[(X-O-(CH₂-CH(CH₃)O-)₃](Me)(EtO)Si(CH₂)₃SH,

[(X-O-(CH₂-CH(CH₃)O-)₄](Me)(EtO)Si(CH₂)₃SH,

[(X-O-(CH₂-CH(CH₃)O-)₅](Me)(EtO)Si(CH₂)₃SH,

[(X-O-(CH₂-CH(CH₃)O-)₆](Me)(EtO)Si(CH₂)₃SH,

[(X-O-(CH₂-CH(CH₃)O-)₇](Me)(EtO)Si(CH₂)₃SH,

[(X-O-(CH₂-CH(CH₃)O-)₈](Me)(EtO)Si(CH₂)₃SH,

[(X-O-(CH₂-CH(CH₃)O-)₉](Me)(EtO)Si(CH₂)₃SH,

[(X-O-(CH₂-CH(CH₃)O-)₁₀](Me)(EtO)Si(CH₂)₃SH,

[(X-O-(CH₂-CH(CH₃)O-)₁₁](Me)(EtO)Si(CH₂)₃SH,

[(X-O-(CH₂-CH(CH₃)O-)₁₂](Me)(EtO)Si(CH₂)₃SH,

[ (X-O- (CH₂-CH (CH₃) O-) ₁₃] (Me) (EtO) Si (CH₂) ₃SH,

[(X-O-(CH₂-CH(CH₃)O-)₁₄] (Me)(EtO) Si(CH₂)₃SH,

[(X-O-(CH₂-CH(CH₃)O-) ₁₅] (Me)(EtO) Si(CH₂)₃SH,

[(X-O-(CH₂-CH(CH₃)O-)₁₆](Me)(EtO)Si(CH₂)₃SH,

[(X-O-(CH₂-CH(CH₃)O-)₁₇](Me)(EtO)Si(CH₂)₃SH,

[(X-O-(CH₂-CH(CH₃)O-)₁₈](Me)(EtO)Si(CH₂)₃SH,

[(X-O-(CH₂-CH(CH₃)O-)₁₉](Me)(EtO)Si(CH₂)₃SH,

[(X-O-(CH2-CH(CH₃)O-)₂₀](Me)(EtO)Si(CH₂)₃SH,

[(X-O-(CH2-CH(CH₃)O-)₁₉](Me)(EtO) Si(CH₂)₃SH,

[(X-O-(CH₂-CH(CH₃)O-)₂₀](Me)(EtO)Si(CH₂)₃SH,

[(X-O-(CH₂-CH(CH₃)O-)₂]₂(Me)Si(CH₂)₃SH,

[(X-O-(CH₂-CH(CH₃)O-)₃]₂(Me)Si(CH₂)₃SH,

[(X-O-(CH₂-CH(CH₃)O-)₄]₂(Me)Si(CH₂)₃SH,

[(X-O-(CH₂-CH(CH₃)O-)₅]₂(Me)Si(CH₂)₃SH,

[(X-O-(CH₂-CH(CH₃)O-)₆]₂(Me)Si(CH₂)₃SH,

[(X-O-(CH₂-CH(CH₃)O-)₇]₂(Me)Si(CH₂)₃SH,

[(X-O-(CH₂-CH(CH₃)O-)₈]₂(Me)Si(CH₂)₃SH,

[(X-O-(CH₂-CH(CH₃)O-)₉]₂(Me)Si(CH₂)₃SH,

[(X-O-(CH₂-CH(CH₃)O-)₁₀] ₂(Me)Si(CH₂)₃SH,

[(X-O-(CH₂-CH(CH₃)O-)₁₁]₂(Me)Si(CH₂)₃SH,

[(X-O-(CH₂-CH(CH₃)O-)₁₂]₂(Me)Si(CH)₃SH,

[(X-O-(CH₂-CH(CH₃)O-)₁₃]₂(Me)Si(CH₂)₃SH,

[(X-O-(CH₂-CH(CH₃)O-)₁₄]₂(Me)Si(CH₂)₃SH,

[(X-O-(CH₂-CH(CH₃)O-)₁₅]₂(Me)Si(CH₂)₃SH,

[(X-O-(CH₂-CH(CH₃)O-)₁₆]₂(Me)Si(CH₂)₃SH,

[(X-O-(CH₂-CH(CH₃)O-)₁₇]₂(Me)Si(CH₂)₃SH,

[(X-O-(CH₂-CH(CH₃)O-)₁₈]₂(Me)Si(CH₂)₃SH,

[(X-O-(CH₂-CH(CH₃)O-)₁₉]₂(Me)Si(CH₂)₃SH,

[(X-O-(CH₂-CH(CH₃)O-)₂₀]₂(Me)Si(CH₂)₃SH,

[(X-O-(CH₂-CH(CH₃)O-)₂](Me)₂Si(CH₂)₃SH,

[(X-O-(CH₂-CH(CH₃)O-)₃](Me)₂Si(CH)₃SH,

[(X-O-(CH₂-CH(CH₃)O-)₄](Me)₂Si(CH₂)₃SH,

[(X-O-(CH₂-CH(CH₃)O-)₅](Me)₂Si(CH)₃SH,

[(X-O-(CH₂-CH(CH₃)O-)₆](Me)₂Si(CH₂)₃SH,

[(X-O-(CH₂-CH(CH₃)O-)₇](Me)₂Si(CH)₃SH,

[(X-O-(CH₂-CH(CH₃)O-)₈](Me)2Si(CH₂)₃SH,

[(X-O-(CH₂-CH(CH₃)O-)₉](Me)₂Si(CH₂)₃SH,

[(X-O-(CH₂-CH(CH₃)O-)₁₀](Me)₂Si(CH₂)₃SH,

[(X-O-(CH₂-CH(CH₃)O-)₁₁](Me)₂Si(CH₂)₃SH,

[(X-O-(CH₂-CH(CH₃)0-)₁₂](Me)₂Si(CH₂)₃SH,

[(X-O-(CH₂-CH(CH₃)O-)₁₃](Me)₂Si(CH₂)₃SH,

[(X-O-(CH₂-CH(CH₃)O-)₁₄](Me)₂Si(CH₂)₃SH,

[(X-O-(CH₂-CH(CH₃)O-)₁₅](Me)₂Si(CH₂)₃SH,

[(X-O-(CH₂-CH(CH₃)O-)₁₆](Me) ₂Si(CH₂)₃SH,

[(X-O-(CH₂-CH(CH₃)O-)₁₇](Me)₂Si(CH₂)₃SH,

[(X-O-(CH₂-CH(CH₃)O-)₁₈](Me)₂Si(CH₂)₃SH,

[(X-O-(CH₂-CH(CH₃)O-)₁₉](Me)₂Si(CH₂)3SHoder

[(X-O-(CH₂-CH(CH₃)O-)₂₀](Me)₂Si(CH₂)₃SH.

Das Organosilan der allgemeinen Formel I kann aus einem Gemisch von Verbindungen von Organosilanen der allgemeinen Formel I bestehen. Die Gemische können Verbindungen von Organosilanen mit denselben oder unterschiedlichen m enthalten. Die Gemische von Organosilanen können Verbindungen mit denselben oder unterschiedlichen Y-Gruppen enthalten. Die Gemische können Verbindungen von Organosilanen mit denselben oder unterschiedlichen R¹-, R²- , R³- oder R⁴-Gruppen enthalten.

Aus den Organosilanen der allgemeinen Formel I können durch Wasserzugabe Kondensationsprodukte, das heisst Oligo- und Polysiloxane gebildet werden. Die Oligo- und Polysiloxane können durch Oligomerisierung oder Cooligomerisierung der entsprechenden Alkoxysilanverbindungen der allgemeinen Formel I durch Wasserzugabe und dem Fachmann auf diesem Gebiet bekannte Additivzugabe und Verfahrensweise erhalten werden. Die so entstandenen Oligo- bzw. Polymerisierungsprodukte können in den Organsilanverbindungen der allgemeinen Formel I enthalten sein.

Das Organosilan der allgemeinen Formel I kann auch ein Oligo- oder Polymerisierungsprodukt der Organosilanverbindung der allgemeinen Formel I sein. Das Organosilan der allgemeinen Formel I kann ein Gemisch aus Oligo- oder Polymerisierungsprodukten der Organosilanverbindung der allgemeinen Formel I und unkondensierter Organosilanverbindung der allgemeinen Formel I sein.

Das Organosilan der allgemeinen Formel I kann sowohl in reiner Form als auch aufgezogen auf einen inerten organischen oder anorganischen Träger, sowie vorreagiert mit einem organischen oder anorganischen Träger dem Mischprozeß zugegeben werden. Bevorzugte Trägermaterialien können gefällte oder pyrogene Kieselsäuren, Wachse, Thermoplaste, natürliche oder synthetische Silikate, natürliche oder synthetische Oxide, speziell Aluminiumoxid, oder Ruße sein. Desweiteren können die Organosilane der allgemeinen Formel I auch vorreagiert mit dem einzusetzenden Füllstoff dem Mischprozeß zugegeben werden.

Als Füllstoffe können für die erfindungsgemäßen Kautschukmischungen die folgenden Füllstoffe eingesetzt werden:
- Ruße: Die hierbei zu verwendenden Ruße sind nach dem Flammruß-, Furnace-, Gasruß oder Thermal-Verfahren hergestellt und besitzen BET-Oberflächen von 20 bis 200 m²/g. Die Ruße können gegebenenfalls auch Heteroatome, wie zum Beispiel Si, enthalten.
- Amorphe Kieselsäuren, hergestellt zum Beispiel durch Fällung von Lösungen von Silikaten oder Flammenhydrolyse von Siliciumhalogeniden mit spezifischen Oberflächen von 5 bis 1000 m²/g, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Titanoxiden, vorliegen.

- Synthetische Silikate, wie Aluminiumsilikat, Erdalkalisilikate, wie Magnesiumsilikat oder Calciumsilikat, mit BET-Oberflächen von 20 bis 400 m²/g und Primärteilchendurchmessern von 10 bis 400 nm.
- Synthetische oder natürliche Aluminiumoxide und - hydroxide.
- Natürliche Silikate, wie Kaolin und andere natürlich vorkommende Kieselsäuren.
- Glasfaser und Glasfaserprodukte (Matten, Stränge) oder Mikroglaskugeln.

Bevorzugt können amorphe Kieselsäuren, hergestellt durch Fällung von Lösungen von Silikaten, mit BET-Oberflächen von 20 bis 400 m²/g in Mengen von 5 bis 150 Gew.-Teilen, jeweils bezogen auf 100 Teile Kautschuk, eingesetzt werden.

Für die Herstellung der erfindungsgemäßen Kautschukmischungen können neben Naturkautschuk auch Synthesekautschuke eingesetzt werden. Bevorzugte Synthesekautschuke sind beispielsweise bei W. Hofmann, Kautschuktechnologie, Genter Verlag, Stuttgart 1980, beschrieben. Sie umfassen unter anderem
- Polybutadien (BR),
- Polyisopren (IR),
- Styrol/Butadien-Copolymerisate, beispielsweise Emulsions-SBR (E-SBR) oder Lösungs-SBR (L-SBR), bevorzugt mit Styrolgehalten von 1 bis 60, besonders bevorzugt 5 bis 50 Gew.-% (SBR),
- Chloropren (CR),
- Isobutylen/Isopren-Copolymerisate (IIR),
- Butadien/Acrylnitril-Copolymere mit Acrylnitrilgehalten von 5 bis 60, vorzugsweise 10 bis 50 Gew.-% (NBR),
- teilhydrierter oder vollständig hydrierter NBR-Kautschuk (HNBR),
- Ethylen/Propylen/Dien-Copolymerisate (EPDM),
- oben genannte Kautschuke, die zusätzlich funktionelle Gruppen besitzen, wie z.B. Carboxy- , Silanol- oder Epoxygruppen, beispielsweise Epoxidierter NR, Carboxy-funktionalisierter NBR oder Silanol- (-SiOH) bzw. Siloxyfunktionalisierter (-Si-OR) SBR,
sowie Mischungen dieser Kautschuke. Für die Herstellung von PKW-Reifenlaufflächen können insbesondere anionisch polymerisierte L-SBR-Kautschuke (Lösungs-SBR) mit einer Glastemperatur oberhalb von -50 °C sowie deren Mischungen mit Dienkautschuken eingesetzt werden.

Die erfindungsgemäßen Kautschukrohmischungen und - vulkanisate können weitere Kautschukhilfsmittel, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide oder Aktivatoren, wie Triethanolamin oder Hexantriol, enthalten.

Weitere Kautschukhilfsmittel können Polyalkylenglykole sein. Polyalkylenglykole können Polyethylenglykole, Polypropylenglykole oder/und Polybutylenglykole sein.

Die Polyalkylenglykole können ein Molekulargewicht zwischen 50 und 50.000 g/mol, bevorzugt zwischen 50 und 20.000 g/mol, besonders bevorzugt zwischen 200 und 10.000 g/mol, ganz besonders bevorzugt zwischen 400 und 6.000 g/mol, außerordentlich bevorzugt zwischen 500 und 3.000 g/mol, haben.

Die Polyethylenglykole können kohlenwasserstoffterminiertes Polyethylenglykol Alk-O-(CH₂-CH₂-O)_{yI}-H bzw. Alk-(CH₂-CH₂-O)_{yI}-Alk sein, mit y^{I} = 2-25, bevorzugt y^{I} = 2-15, besonders bevorzugt y^{I} = 3-8 und 10-14, ganz besonders bevorzugt y^{I} = 3-6 und 10-13, und Alk gleich ein verzweigter oder unverzweigter, unsubstituierter oder substituierter, gesättigter oder ungesättigter Kohlenwasserstoff mit 1 bis 35, bevorzugt 4 bis 25, besonders bevorzugt 6 bis 20, ganz besonders bevorzugt 10 bis 20, außerordentlich bevorzugt 11 bis 14, Kohlenstoffatomen.

Die Polypropylenglykole können kohlenwasserstoffterminiertes Polypropylenglykol Alk-O-(CH₂-CH(CH₃)-O)_{yI}-H bzw. Alk-O-(CH₂-CH(CH₃)-O)_{yI}-Alk sein, wobei y^{I} und Alk die oben genannte Bedeutung haben.

Die Polybutylenglykole können kohlenwasserstoffterminiertes Polybutylenglykol Alk-O-(CH₂-CH₂-CH₂-CH₂-O)_{yI}-H, Alk-O- (CH₂-CH (CH₃) -CH₂-O)_{yI}-H, Alk-O-(CH₂-CH₂-CH₂-CH₂-O)_{yI}-Alk oder Alk-O-(CH₂-CH (CH₃)-CH₂-O)_{yI}-Alk sein, wobei y^{I} und Alk die oben genannte Bedeutung haben.

Polyalkylenglykole können polyethylenglykol-, polypropylenglykol-, polybutylenglykol-, oder mit Mischungen davon verethertes Neopentylglykol HO-CH₂-C(Me)₂-CH₂-OH, Pentaerythrit C(CH₂-OH)₄ oder Trimethylolpropan CH₃-CH₂-C(CH₂-OH)₃, wobei die Wiederholeinheiten von Ethylenglykol, Propylenglykol oder/und Butylenglykol in den veretherten Polyalkoholen zwischen 2 und 100, bevorzugt zwischen 2 und 50, besonders bevorzugt zwischen 3 und 30, ganz besonders bevorzugt zwischen 3 und 15, sind, sein.

Die Kautschukhilfsmittel können in bekannten Mengen, die sich unter anderem nach dem Verwendungszweck richten, eingesetzt werden. Übliche Mengen sind zum Beispiel Mengen von 0,1 bis 50 Gew.-%, vorzugsweise 0,1 bis 30 Gew.-%, bezogen auf Kautschuk. Als Vernetzer können Schwefel oder schwefelspendende Substanzen eingesetzt werden. Die erfindungsgemäßen Kautschukmischungen können darüber hinaus Vulkanisationsbeschleuniger enthalten. Beispielsweise können als geeignete Vulkanisationsbeschleuniger Mercaptobenzthiazole, Sulfenamide, Guanidine, Thiurame, Dithiocarbamate, Thioharnstoffe und Thiocarbonate eingesetzt werden. Die Vulkanisationsbeschleuniger und Schwefel können in Mengen von 0,1 bis 10 Gew.-%, bevorzugt 0.1 bis 5 Gew.-%, bezogen auf Kautschuk, eingesetzt werden.

Ein weiterer Gegenstand der Erfindung ist ein Verfahren zur Herstellung der erfindungsgemäßen Kautschukmischung, welches dadurch gekennzeichnet ist, daß man den Kautschuk, Füllstoff, gegebenenfalls weitere Kautschukhilfsmittel und mindestens ein Organosilan der allgemeinen Formel I mischt.

Die Vulkanisation der erfindungsgemäßen Kautschukmischungen kann bei Temperaturen von 100 bis 200°C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und dem Organosilan der allgemeinen Formel I kann in bekannten Mischaggregaten, wie Walzen, Innenmischern und Mischextrudern, durchgeführt werden.

Die erfindungsgemäßen Kautschukmischungen können zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen, verwendet werden.

Die erfindungsgemäßen Kautschukmischungen zeigen einen verbesserten Weiterreißwiderstand.

### Beispiele:

### Vergleichsbeispiel 1: 3-Mercaptopropyl(dimethylethoxysilan) (MPDMES)

In einem Autoklaven mit Glasdoppelmantel und Hastelloy C22 Deckel + Armaturen (Buechi AG) werden bei Raumtemperatur 37,5 g getrocknetes NaSH und 600 ml trockenes Ethanol vorgelegt. Die Suspension wird erwärmt und 20 min bei 50°C gerührt. Es wird eine Mischung aus 100 g 3-Chlorpropyl(dimethylethoxysilan) und 5 g 3-Chlorpropyl(dimethylchlorsilan) mit einer Druckbürette zu der Suspension gegeben. Zu der Mischung werden weitere 200 ml Ethanol gegeben und unter Rühren auf 93-96°C erwärmt. Die Temperatur wird für 180 min gehalten. Die Mischung wird anschließend auf Raumtemperatur abgekühlt.

Die entstandene Suspension wird filtriert und der Filterkuchen mit Toluol gewaschen. Das Filtrat wird am Rotationsverdampfer vom Lösungsmittel befreit. Die erhaltene Suspension wird filtriert, der Filterkuchen mit Toluol gewaschen und das Filtrat nochmals am Rotationsverdampfer vom Toluol befreit.

Es werden 88,3 g flüssiges, farbloses Produkt erhalten.

### Vergleichsbeispiel 2: [(EtO)Me₂Si-CH₂-CH₂-CH₂-]₂S_{3,66}

In einen 2000 ml Vierhalskolben werden 700 ml Ethanol mit 337 g getrocknetem Na₂S₄ (1,94 mol) und 700 g 3-Chlorpropyl(dimethylethoxysilan) (3,88 mol) eingewogen und unter Rühren zum Sieden erhitzt. Die Reaktionslösung wird für 270 min unter Rückfluß gekocht. Der Suspension werden 3 g 3-Chlorpropyl(dimethylethoxysilan) zugesetzt und für weitere 30 min auf Rückfluß erhitzt.

Die Suspension wird abgekühlt, filtriert und der Rückstand mit Ethanol gewaschen. Das Filtrat wird am Rotationsverdampfer bei 20-400 mbar und 60-90°C vom Lösungsmittel befreit und nochmals filtriert. Es werden 769,2 g einer orangen Flüssigkeit isoliert.

### Analytik:

1. ¹H-NMR

| Gehalt an 3-Chlorpropyl(dimethyl-ethoxysilan) | Gehalt an [(EtO)Me₂Si-CH₂-CH₂-CH₂-]₂Sₓ | | |
|---|---|---|---|
| | x = 2 | x = 3 | x = 4 |
| mol.-% | mol- % | mol- % | mol- % |
| 2,8 | 17,1 | 28,0 | 25,2 |

Die mittlere Kettenlänge -Sₓ-, basierend auf den NMR-Daten (S₁-S₁₀), beträgt 3, 66.
2. ²⁹Si-NMR
Das Vergleichsbeispiel 2 enthält 1,6 mol-% dimerisiertes [(EtO)Me₂Si-CH₂-CH₂-CH₂-]₂Sₓ .

Für die Analyse des Vergleichsproduktes wird ein DRX 500 NMR-Gerät der Firma Bruker gemäß den dem Fachmann bekannten Regeln und Bedienvorschriften verwendet. Die Messfrequenzen sind 99,35 MHz für ²⁹Si-Kerne und 500,13 MHz für ¹H-Kerne. Als Referenz dient Tetramethylsilan (TMS).

Die Analyse von Bis(alkoxysilylorganyl)polysulfiden und Mercaptoorganyl(alkoxysilanen) und deren Gemischen wird beispielsweise beschrieben in U. Görl, J. Münzenberg, D. Luginsland, A. Müller Kautschuk Gummi Kunststoffe 1999, 52(9), 588ff, D. Luginsland Kautschuk Gummi Kunststoffe 2000, 53(1-2), 10ff oder M. W. Backer et al, Polymer Preprints 2003, 44(1), 245ff.

### Beispiel 2: Gummitechnische Untersuchungen

Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks. Die erfindungsgemäßen Silane werden gewichtsgleich dosiert. Das allgemeine Verfahren zur Herstellung von Kautschukmischungen und deren Vulkanisate ist in dem Buch: "Rubber Technology Handbook", W. Hofmann, Hanser Verlag 1994 beschrieben.

Die Kopplungsreagenzien Si 69, ein Bis-(triethoxy-silylpropyl)tetrasulfid (TESPT), und VP Si 263, ein 3-Mercaptopropyl(triethoxysilan) (MPTES), sind Verkaufsprodukte der Degussa AG. Das Kopplungsreagenz VP Si 208, ein Octylsilyltriethoxysilan, ist als Alkylsilan ein Verarbeitungshilfsmittel und ist ein Verkaufsprodukt der Degussa AG.

**Tabelle 1:**

| Substanz | Mischung 1 | Mischung 2 | Mischung 3 | Mischung 4 |
|---|---|---|---|---|
| | Referenz [phr] | Referenz [phr] | Referenz [phr] | Referenz [phr] |
| **1. Stufe** | | | | |
| Buna VSL 5025-1 | 96 | 96 | 96 | 96 |
| Buna CB 24 | 30 | 30 | 30 | 30 |
| Ultrasil 7000 GR | 80 | 80 | 80 | 80 |
| Si 69 (TESPT) | 2 | - | - | - |
| VP Si 263 (MPTES) | - | 2 | - | - |
| Silan aus Vergleichsbeispiel 2 (DMESPT) | - | - | 2 | - |
| Silan aus Vergleichsbeispiel 1 (MPDMES) | - | - | - | 2 |
| VP Si 208 | 2,5 | 2,5 | 2,5 | 2,5 |
| ZnO | 3 | 3 | 3 | 3 |
| Stearinsäure | 2 | 2 | 2 | 2 |
| Naftolen ZD | 10 | 10 | 10 | 10 |
| Vulkanox 4020 | 1,5 | 1,5 | 1,5 | 1,5 |
| Protektor G 3108 | 1 | 1 | 1 | 1 |

| **2. Stufe** | | | | |
|---|---|---|---|---|
| Batch Stufe 1 | | | | |

| **3. Stufe** | | | | |
|---|---|---|---|---|
| Batch Stufe 2 | | | | |
| Vulkacit D | 2 | 2 | 2 | 2 |
| Vulkacit CZ | 1,5 | 1,5 | 1,5 | 1,5 |
| Perkacit TBzTD | 0,2 | 0,2 | 0,2 | 0,2 |
| Schwefel | 1,5 | 1,5 | 1,5 | 1,5 |

Bei dem Polymer VSL 5025-1 handelt es sich um ein in Lösung polymerisiertes SBR-Copolymer der Bayer AG, mit einem Styrolgehalt von 25 Gew.-% und einem Butadiengehalt von 75 Gew.-%. Das Copolymer enthält 37,5 phr Öl und weist eine Mooney-Viskosität (ML 1+4/100°C) von 50 auf.

Bei dem Polymer Buna CB 24 handelt es sich um ein cis-1,4-Polybutadien (Neodymtyp) der Bayer AG, mit cis-1,4-Gehalt von mindestens 96 % und einer Mooney-Viskosität von 44±5.

Ultrasil 7000 GR ist eine leicht dispergierbare Kieselsäure der Degussa AG und besitzt eine BET-Oberfläche von 170 m²/g.

Als aromatisches öl wird Naftolen ZD der Chemetall verwendet, bei Vulkanox 4020 handelt es sich um PPD der Bayer AG und Protektor G3108 ist ein Ozonschutzwachs der Paramelt B.V.. Vulkacit D (DPG) und Vulkacit CZ (CBS) sind Handelsprodukte der Bayer AG. Perkacit TBzTD (Tetrabenzylthiuramtetrasulfid) ist ein Produkt von Flexsys N.V..

Die Kautschukmischungen werden in einem Innenmischer entsprechend der Mischvorschrift in Tabelle 2 hergestellt.

**Tabelle 2:**

| Stufe 1 | | |
|---|---|---|
| Einstellunqen | | |
| Mischaggregat | | Werner & Pfleiderer E-Typ |
| Drehzahl | | 60 min⁻¹ |
| Stempeldruck | | 5,5 bar |
| Leervolumen | | 1,58 L |
| Füllgrad | | 0,56 |
| Durchflußtemp. | | 70°C |
| Mischvorgang | | |
| 0 bis | 1 min | Buna VSL 5025-1 + Buna CB 24 |
| 1 bis | 2 min | 1/2 Kieselsäure, ZnO, Stearinsäure, Naftolen ZD, Silan |
| 2 bis | 4 min | 1/2 Kieselsäure, Vulkanox, Protektor |
| | 4 min | Säubern |
| 4 bis | 5 min | Mischen |
| | 5 min | Lüften |
| 5 bis | 6 min | Mischen und ausfahren |
| | | |
| Batch-Temp. | | 145-155°C |
| Lagerung | | 24 h bei Raumtemperatur |
| | | |

| Stufe 2 | | |
|---|---|---|
| Einstellunqen | | |
| Mischaggregat | | Wie in Stufe 1 bis auf: |
| Drehzahl | | 70 min⁻¹ |
| Durchflußtemp. | | 80°C |
| Füllgrad | | 0,54 |
| Mischvorgang | | |
| 0 bis | 2 min | Batch Stufe 1 aufbrechen |
| 2 bis | 5 min | Batchtemperatur 150°C durch Drehzahlvariation halten |
| | 5 min | Ausfahren |
| | | |
| Batch-Temp. | | 145-155°C |
| Lagerung | | 4 h bei Raumtemperatur |

| Stufe 3 | | |
|---|---|---|
| Einstellunqen | | |
| Mischaggregat | | wie in Stufe 1 bis auf |
| Drehzahl | | 40 min⁻¹ |
| Füllgrad | | 0,52 |
| Durchflußtemp. | | 50°C |
| Mischvorgang | | |
| 0 bis | 2 min | Batch Stufe 2, Beschleuniger, Schwefel |
| | 2 min | ausfahren und auf Labormischwalzwerk Fell bilden (Durchmesser 200 mm, Länge 450 mm, Durchflußtemperatur 50°C) |
| | | |
| | | Homogenisieren: 5* links, 5* rechts einschneiden und 6* bei weitem Walzenspalt (6 mm) und 3* bei engem Walzenspalt (3 mm) Fell ausziehen. |
| | | |
| Batch-Temp. | | < 110°C |

In Tabelle 3 sind die Methoden für die Gummitestung zusammengestellt.

**Tabelle 3:**

| Physikalische Testung | | Norm/Bedingungen |
|---|---|---|
| Zugversuch am Ring, 23°C | | DIN 53504, ISO 37 |
| | Zugfestigkeit (MPa) | |
| | Spannungswerte (MPa) | |
| | Bruchdehnung (%) | |
| Weiterreißversuch nach Graves | | DIN 53 515 |
| DIN-Abrieb, 10 N Kraft (mm³) | | DIN 53 516 |
| Ball Rebound, 60°C (%) | | ASTM D 5308 |

Die Tabelle 4 zeigt die Ergebnisse der gummitechnischen Prüfung.

**Tabelle 4:**

| **Vulkanisatdaten** | **Einheit** | **Mischung 1** | **Mischung 2** | **Mischung 3** | **Mischung 4** |
|---|---|---|---|---|---|
| | | **(Ref.)** | **(Ref.)** | **(Ref.)** | **(Ref.)** |
| Zugfestigkeit | [MPa] | 12,8 | 15,2 | 12,2 | 15,2 |
| Spannungswert 100% | [MPa] | 1,2 | 1,2 | 1,3 | 1,2 |
| Spannungswert 300% | [MPa] | 5,8 | 6,2 | 6,1 | 6,7 |
| Spannungswert 300 % / 100 % | [-] | 4,8 | 5,2 | 4,7 | 5,6 |
| Bruchdehnung | [%] | 480 | 480 | 460 | 460 |
| Weiterreißwider-stand | [N/mm] | 53 | 63 | 45 | 74 |
| Ball-Rebound (60°C) | [%] | 65,5 | 69,5 | 65,1 | 69,1 |
| DIN-Abrieb | [mm³] | 88 | 66 | 82 | 59 |

Daß Mercaptosilane eine höhere Kopplungsausbeute und damit Verstärkung als ein Polysulfid besitzen, ist aus DE10015309A1 bekannt. Dies wird durch den Vergleich von Mischung 2 zu Mischung 1 durch den höheren Verstärkungsfaktor (Spannungswert 300% / 100%), den höheren Ball-Rebound-Wert und den verbesserten (niedrigeren) DIN-Abrieb bestätigt.

In EP 1043357 A1 wird für das Triethoxysilylpropyldisulfid, (Beispiel 1) gezeigt, daß durch die Substitution von je zwei Ethoxygruppen pro Siliciumatom durch Methylgruppen (Beispiel 2) keine Verschlechterung der gummitechnischen Eigenschaften, wie beispielsweise statische Daten, wie Zugfestigkeit und Spannungswerte, und dynamische Daten, wie Ball-Rebound, Dynamische Moduli und tan δ, gegenüber der Triethoxy-Variante zu verzeichnen ist.

Im Gegensatz zu den vorgenannten Beobachtungen bei den Polysulfiden aus EP 1043357, zeigt die Dimethylvariante des Mercaptosilans (Mischung 4) signifikante Verbesserungen wichtiger Eigenschaften. So sind der Spannungswert bei 300 % Dehnung, der Verstärkungsfaktor (Spannungswert 300 % / 100 %), der Weiterreißwiderstand und der DIN-Abrieb deutlich besser als bei der entsprechenden Triethoxyvariante (MPTES) (Mischung 2). Sie sind ebenfalls deutlich besser als bei TESPT (Mischung 1) und der entsprechenden Dimethylvariante DMESPT (Mischung 3).

### Beispiel 3: HS-CH₂-CH₂CH₂Si (Me) (OMe) [(O-CH (CH₃) -CH₂)₅-O-C₄H₉]

In einem Rundkolben werden 86,64 g HS-CH₂-CH₂-CH₂-Si(Me)(OMe)₂, 163,29 g Polypropylenglykolmonobutylether (CAS 9003-13-8, Firma Aldrich, M_{w} = 340 g/mol) und 0,23 g p-Toluolsulfonsäure gemischt. Die Mischung wird am Rotationsverdampfer bei 150-155°C Ölbadtemperatur und 100-400 mbar für 6,5 h behandelt. Der freiwerdende, flüchtige Alkohol wird abdestilliert. Die isolierte Auswaage des Produktes beträgt 236 g.

### Beispiel 4: HS-CH₂-CH₂-CH₂-Si (Me) (OMe) [(O-CH(CH₃)-CH₂)₁₆-O-C₄H₉]

In einem Rundkolben werden 86,64 g HS-CH₂-CH₂-CH₂-Si(Me)(OMe)₂ , 480,03 g Polypropylenglykolmonobutylether (CAS 9003-13-8, Firma Aldrich, M_{w}= 1000 g/mol) und 0,23 g p-Toluolsulfonsäure gemischt. Die Mischung wird am Rotationsverdampfer bei 145-155°C Ölbadtemperatur und 100-400 mbar für 4,5 h behandelt. Der freiwerdende, flüchtige Alkohol wird abdestilliert. Die isolierte Auswaage des Produktes beträgt 552 g.

### Beispiel 5: HS-CH₂-CH₂-CH₂-Si (Me) (OMe) [(O-CH₂-CH₂)₄-O-CH₂-CH(Et)-C₉H₉]

In einem Rundkolben werden 86,62 g HS-CH₂-CH₂-CH₂-Si(Me) (OMe)₂, 147 g Polyethylenglykol-mono-2-ethylhexyl-ether (Aduxol HEX-04, CAS 26468-86-0, Firma Schärer & Schläpfer AG) und 0,5 g Ti(OBu)₄ gemischt. Die Mischung wird am Rotationsverdampfer bei 125-135°C Ölbadtemperatur und 150-300 mbar für 4,5 h behandelt. Der freiwerdende, flüchtige Alkohol wird abdestilliert. Die isolierte Auswaage des Produktes beträgt 214 g.

### Beispiel 6: HS-CH₂-CH₂-CH₂-Si (Me) (OEt) [(O-CH₂-CH₂)₂-O-C₆H₁₃]

In einem Rundkolben werden 50 g HS-CH₂-CH₂-CH₂-Si(Me) (OEt)₂ , 45,7 g Diethylenglykol-monohexyl-ether (CAS 112-59-4, bezogen über Merck/VWR International) und 0,23 g Ti(OBu)₄ gemischt. Die Mischung wird am Rotationsverdampfer bei 130-135°C Ölbadtemperatur und 100-300 mbar für 6 h behandelt. Der freiwerdende, flüchtige Alkohol wird abdestilliert. Die Menge an isoliertem Produkt beträgt 80 g.

### Beispiel 7: HS-CH₂-CH₂-CH₂-Si (Me) (OEt) [(O-CH (CH₃) -CH₂)₁₆-O-C₄H₉]

In einem Rundkolben werden 80 g HS-CH₂-CH₂-CH₂-Si(Me)(OEt)₂, 384,07 g Polypropylenglykolmonobutylether (CAS 9003-13-8, Firma Aldrich, M_{w} = 1000 g/mol) und 0,2 g p-Toluolsulfonsäure gemischt. Die Mischung wird am Rotationsverdampfer bei 145-155°C Ölbadtemperatur und 100-300 mbar für 6 h behandelt. Der freiwerdende, flüchtige Alkohol wird abdestilliert. Die Auswaage des erhaltenen Produktes beträgt 448 g.

### Beispiel 8: HS-CH₂-CH₂-CH₂-Si (Me) (OEt) [(O-CH₂-CH₂)₄-O-CH₂-CH(Et)-C₄H₉]

In einem Rundkolben werden 50 g HS-CH₂-CH₂-CH₂-Si(Me) (OEt)₂ , 73,5 g Polyethylenglykol-mono-2-ethylhexyl-ether (Aduxol HEX-04, CAS 26468-86-0, Firma Schärer & Schläpfer AG) und 0,3 g Ti(OBu)₄ gemischt. Die Mischung wird am Rotationsverdampfer bei 125-135°C Ölbadtemperatur und 150-300 mbar für 4,5 h behandelt. Der freiwerdende, flüchtige Alkohol wird abdestilliert. Die Auswaage an erhaltenem Produkt beträgt 108 g.

### Vergleichsbeispiel 3 : Herstellung von HS-CH₂-CH₂-CH₂-SiMe (OEt) ₂

HS-CH₂-CH₂-CH₂-SiMe(OEt)₂ wird in Anlehnung an EP 1 538 152 A1 Beispiel 4 hergestellt. Als Einsatzstoffe werden Cl-CH₂-CH₂-CH₂-SiMe (OEt) ₂, Cl-CH₂-CH₂-CH₂-SiMeCl₂, NaSH (getrocknet) und Ethanol eingesetzt. Die erhaltene Suspension wird filtriert, vom Lösungsmittel befreit und das Silan destillativ gereinigt.

### Beispiel 10: Gummitechnische Untersuchungen

Die für die Kautschukmischungen verwendete Rezeptur ist in der folgenden Tabelle 5 angegeben. Die Mischungen unterscheiden sich in dem zugegebenen Kopplungsagens wie in Tabelle 6 angegeben. Die Mischvorschrift ist in Tabelle 2 aufgeführt.

**Tabelle 5:**

| Substanz | Mischungen 5 bis 13 |
|---|---|
| | [phr] |
| **1. Stufe** | |
| Buna VSL 5025-1 | 96 |
| Buna CB 24 | 30 |
| Ultrasil 7000 GR | 80 |
| Silane aus Tabelle 6 | 2 |
| ZnO | 3 |
| Stearinsäure | 2 |
| Naftolen ZD | 10 |
| Vulkanox 4020 | 1,5 |
| Protektor G 3108 | 1 |

| **2. Stufe** | |
|---|---|
| Batch Stufe 1 | |

| **3. Stufe** | |
|---|---|
| Batch Stufe 2 | |
| Vulkacit D | 2 |
| Vulkacit CZ | 1,5 |
| Perkacit TBzTD | 0,2 |
| Schwefel | 1,5 |

**Tabelle 6:**

| Mischung Nr. | Silan |
|---|---|
| 5 (Ref.) | VP Si 263 |
| 6 (Ref.) | Silan aus Vergleichsbeispiel 1 |
| 7 (Ref.) | Silan aus Vergleichsbeispiel 3 |
| 8 | Silan aus Beispiel 3 |
| 9 | Silan aus Beispiel 4 |
| 10 | Silan aus Beispiel 5 |
| 11 | Silan aus Beispiel 6 |
| 12 | Silan aus Beispiel 7 |
| 13 | Silan aus Beispiel 8 |

In Tabelle 7 sind die Methoden für die Gummitestung zusammengestellt.

**Tabelle 7:**

| Physikalische Testung | | Norm/Bedingungen |
|---|---|---|
| Anvulkanisationsverhalten, 130°C | | DIN 53523/4, ISO 667 |
| | Anvulkanisationszeit t₅ | |
| | Anvulkanisationszeit t₃₅ | |
| Weiterreißversuch DIE A | | ASTM D 624 |
| Weiterreißversuch DIE B | | ASTM D 624 |

Die Tabelle 8 zeigt die Ergebnisse der gummitechnischen Prüfung.

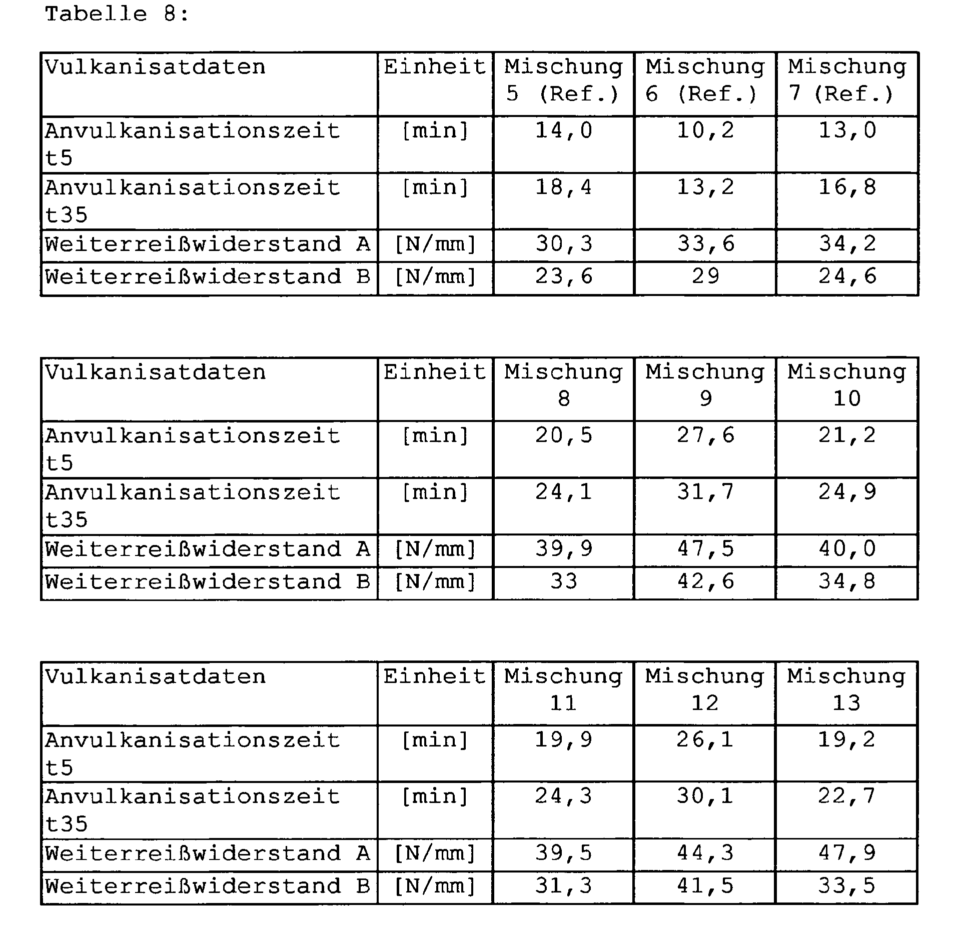

Wie man anhand der Vulkanisatergebnisse erkennen kann, sind die Weiterreißwiderstände der Mischungen 8 bis 13 deutlich besser als die der Mischungen 5, 6, 7. Die Mischungen mit den Silanen mit langkettigem Alkohol als Substituenten zeigen ein verbessertes Weiterreißverhalten gegenüber den anderen Mischungen. Dies gilt sowohl gegenüber unsubstituiertem Mercaptosilan aus Mischung 5 (VP Si 263) als auch gegenüber den Mercaptosilanen mit einer Methylgruppe (Mischung 7) und mit zwei Methylgruppen (Mischung 6). Die Mischungen 8 bis 13 zeigen zudem noch verbesserte Mooney-Scorch Daten. Damit verbunden ist eine verbesserte Verarbeitungssicherheit, z.B. bei der Extrusion von Reifenlaufflächen oder dem Spritzgießen.

### Beispiel 11: Gummitechnische Untersuchungen

Die für die kautschukmischungen verwendete Rezeptur ist in der folgenden Tabelle 9 angegeben. Die Mischungen unterscheiden sich in dem zugegebenen Kopplungsagens auf Basis equimolarer Dosierung wie in Tabelle 10 angegeben. Die Mischvorschrift ist in Tabelle 2 aufgeführt.

**Tabelle 9:**

| Substanz | Mischungen 14 bis 21 |
|---|---|
| | [phr] |
| **1. Stufe** | |
| Buna VSL 5025-1 | 96 |
| Buna CB 24 | 30 |
| Ultrasil 7000 GR | 80 |
| Silane aus Tabelle 10 | equimolar |
| ZnO | 3 |
| Stearinsäure | 2 |
| Naftolen ZD | 10 |
| Vulkanox 4020 | 1,5 |
| Protektor G 3108 | 1 |

| **2. Stufe** | |
|---|---|
| Batch Stufe 1 | |

| **3. Stufe** | |
|---|---|
| Batch Stufe 2 | |
| Vulkacit D | 2 |
| Vulkacit CZ | 1,5 |
| Perkacit TBzTD | 0,2 |
| Schwefel | 1,5 |

**Tabelle 10:**

| Mischung Nr. | Silan | phr |
|---|---|---|
| 14 (Ref.) | VP Si 263 | 2,00 |
| 15 (Ref.) | Silan aus Vergleichsbeispiel 3 | 1,75 |
| 16 | Silan aus Beispiel 3 | 4,31 |
| 17 | Silan aus Beispiel 4 | 9,68 |
| 18 | Silan aus Beispiel 5 | 3,82 |
| 19 | Silan aus Beispiel 6 | 2,97 |
| 20 | Silan aus Beispiel 7 | 9,80 |
| 21 | Silan aus Beispiel 8 | 3,94 |

Die durchgeführten Prüfungen sind in Tabelle 7 aufgelistet. Die Tabelle 11 zeigt die Ergebnisse der gummitechnischen Prüfung.

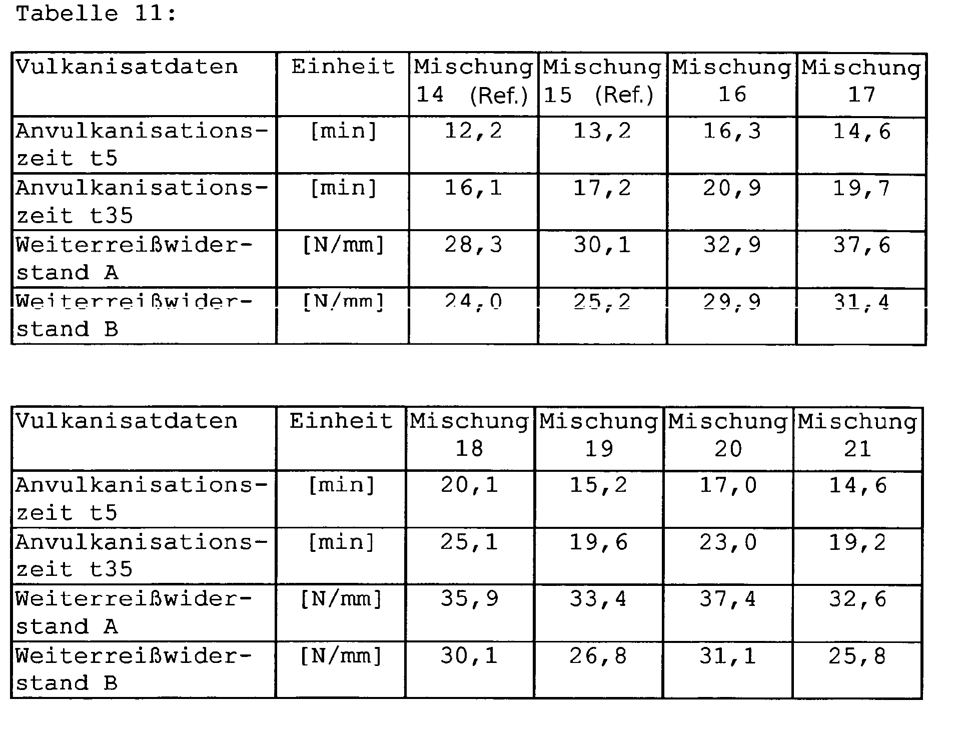

Auch bei equimolarer Dosierung zeigen die Mischungen mit den Silanen aus den Beispielen 3 bis 8 Vorteile sowohl im Weiterreißverhalten als auch im Scorch-Verhalten gegenüber unsubstituiertem Mercaptosilan und Mercaptosilan mit einer Methyl- und zwei Ethoxygruppen.

## Patentansprüche

1. Kautschukmischungen, enthaltend Kautschuk, Füllstoffe, gegebenenfalls weitere Kautschukhilfsmittel und mindestens ein Organosilan der allgemeinen Formel I,
R¹R²R³SiR⁴-SH (I)
wobei R¹ Methyl oder Ethyl ist,
R² -O- (Y-O)ₘ-X ist, mit Y= verzweigte oder unverzweigte, gesättigte oder ungesättigte zweibindige Kohlenwasserstoffgruppe, X eine C1- bis C9-Alkylgruppe und m=1-40 ist,
R³ Methyl, Ethyl Methoxy, Ethoxy oder R² ist
und R⁴ eine verzweigte oder unverzweigte, gesättigte oder ungesättigte, aliphatische, aromatische oder gemischt aliphatische /aromatische zweibindige C₁-C₁₂ Kohlenwasserstoffgruppe ist.

2. Kautschukmischungen gemäß Anspruch 1, **dadurch gekennzeichnet, daß** das Organosilan der allgemeinen Formel I oligomerisierte oder polymerisierte Organosilane der allgemeinen Formel I enthält.

3. Kautschukmischungen gemäß Anspruch 1, **dadurch gekennzeichnet, daß** das Kautschukhilfsmittel ein Polyalkylenglykol ist.

4. Verfahren zur Herstellung der Kautschukmischungen gemäß Anspruch 1, **dadurch gekennzeichnet, daß** man den Kautschuk, Füllstoff, gegebenenfalls weitere Kautschukhilfsmittel und mindestens ein Organosilan der allgemeinen Formel I mischt.

5. Verwendung der Kautschukmischung gemäß Anspruch 1 zur Herstellung von Formkörpern.

6. Verwendung der Kautschukmischung gemäß Anspruch 5 zur Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

## Claims

1. Rubber mixtures comprising rubber, fillers, optionally further rubber auxiliaries and at least one organosilane of the general formula I,
R¹R²R³SiR⁴-SH (I)
where R¹ is methyl or ethyl,
R² is -O-(Y-O)ₘ-X, where Y is a branched or unbranched, saturated or unsaturated divalent hydrocarbon group, X is a C1- to C9-alkyl group and m is 1-40,
R³ is methyl, ethyl, methoxy, ethoxy or R²
and R⁴ is a branched or unbranched, saturated or unsaturated, aliphatic, aromatic or mixed aliphatic/aromatic divalent C₁-C₁₂ hydrocarbon group.

2. Rubber mixtures according to Claim 1, **characterized in that** the organosilane of the general formula I comprises oligomerized or polymerized organosilanes of the general formula I.

3. Rubber mixtures according to Claim 1, **characterized in that** the rubber auxiliary is a polyalkylene glycol.

4. Process for the preparation of rubber mixtures according to Claim 1, **characterized in that** the rubber, filler, optionally further rubber auxiliaries and at least one organosilane of the general formula I are mixed.

5. Use of the rubber mixture according to Claim 1 for the production of shaped articles.

6. Use of the rubber mixture according to Claim 5 for the production of pneumatic tyres, tyre treads, cable sheathing, hoses, drive belts, conveyor belts, roller coverings, tyres, shoe soles, sealing rings and damping elements.

## Revendications

1. Mélanges de caoutchouc, contenant du caoutchouc, des charges, éventuellement des adjuvants de caoutchouc supplémentaires et au moins un organosilane de formule générale I
R¹R²R³SiR⁴-SH (I)
dans laquelle R¹ est méthyle ou éthyle,
R² est -O-(Y-O)ₘ-X, avec Y = groupe hydrocarboné bivalent ramifié ou non ramifié, saturé ou insaturé, X est un groupe alkyle en C1 à C9 et m = 1 à 40,
R³ est méthyle, éthyle, méthoxy, éthoxy ou R² et R⁴ est un groupe hydrocarboné en C₁-C₁₂ bivalent ramifié ou non ramifié, saturé ou insaturé, aliphatique, aromatique ou aliphatique/aromatique mixte.

2. Mélanges de caoutchouc selon la revendication 1, **caractérisés en ce que** l'organosilane de formule générale I contient des organosilanes oligomérisés ou polymérisés de formule générale I.

3. Mélanges de caoutchouc selon la revendication 1, **caractérisés en ce que** l'adjuvant de caoutchouc est un polyalkylène glycol.

4. Procédé de fabrication des mélanges de caoutchouc selon la revendication 1, **caractérisé en ce que** le caoutchouc, la charge, éventuellement des adjuvants de caoutchouc supplémentaires et au moins un organosilane de formule générale I sont mélangés.

5. Utilisation du mélange de caoutchouc selon la revendication 1 pour la fabrication de corps moulés.

6. Utilisation du mélange de caoutchouc selon la revendication 5 pour la fabrication de pneus, de bandes de roulement, de gainage, de tuyaux, de courroies de transmission, de tapis roulants, de garnitures de cylindres, de bandages, de semelles de chaussures, de bagues d'étanchéité et d'amortisseurs.
